# EUROPÄISCHE PATENTANMELDUNG

(11) **EP 3 085 242 A1**
(43) Veröffentlichungstag der Anmeldung: **26.10.2016**
(21) Anmeldenummer: 15164438.2
(22) Anmeldetag: 21.04.2015
(51) Int. Cl.: A23L 2/38, A23L 2/39, A23L 2/52, A23L 2/58, A23L 2/60, B65D 1/02

(54) **FUNKTIONELLES GETRÄNK**

(71) Anmelder: DR.OWL-NutriHealth GmbH, 1190 Wien (AT)
(72) Erfinder: Haschke, Ferdinand, 1814 La Tour-de-Peilz (CH); Haschke, Georg Ferdinand, 1190 Wien (AT)
(74) Vertreter: Lang, Johannes

(57) **Zusammenfassung**

Die Erfindung betrifft ein System aus zwei getrennten Zubereitungen zur Herstellung eines funktionellen Getränks, welches eine flüssige Zubereitung (A) und eine feste oder flüssige Zubereitung (B) umfasst, wobei die Zubereitung (A) Wasser enthält, die Zubereitung (A) oder (B) ein Elektrolytsalz enthält, die Zubereitung (B) ein Vitamin der Gruppe B und/oder Cystein enthält, eine der beiden Zubereitungen einen anregenden Stoff, insbesondere Coffein, enthält, und eine der beiden Zubereitungen einen Lebensmittelfarbstoff, der beim Vermischen der Zubereitungen (A) und (B) eine Farbänderung verursacht, enthält. Weiterhin umfasst die Erfindung eine Getränkeverpackung mit den beiden Zubereitungen, wobei der Verschluss der Getränkeverpackung mit der Zubereitung (B) befüllt ist.

## Beschreibung

Die vorliegende Erfindung betrifft ein System umfassend zwei getrennte Zubereitungen zur Herstellung eines funktionellen Getränks, das damit erhaltene funktionelle Getränk sowie eine Getränkeverpackung zur Herstellung des funktionellen Getränks.

Auf dem Markt werden von Konsumenten zunehmend Getränke nachgefragt, die einerseits gesundheitsfördernd sind und andererseits ohne großen Aufwand in vordosierter Menge leicht und frisch hergestellt werden können.

Diese Aufgabe wird durch die vorliegende Erfindung gelöst, die ein System mit zwei getrennten, mischfertigen Zubereitungen bereitstellt, vorzugsweise in einer Getränkeverpackung, wobei die Zubereitungen vor dem Verzehr des Getränks in der Verpackung über einen speziellen Mechanismus, vorzugsweise über einen speziellen Verschluss, durch Abgabe der einen Zubereitung in die andere Zubereitung miteinander vermischt werden und beim Vermischen ein Farbumschlag auftritt.

Somit betrifft die Erfindung ein System umfassend zwei getrennte Zubereitungen zur Herstellung eines funktionellen Getränks, wobei das System eine flüssige Zubereitung (A) und eine feste oder flüssige Zubereitung (B) umfasst, wobei die Zubereitung (A) wenigstens Wasser enthält, wenigstens die Zubereitung (A) oder die Zubereitung (B), insbesondere die Zubereitung (A), wenigstens ein Salz enthält, die Zubereitung (B) wenigstens einen Stoff ausgewählt aus Cystein und den Vitaminen der Gruppe B enthält, wenigstens die Zubereitung (A) oder die Zubereitung (B) einen anregenden Stoff, insbesondere Coffein, enthält, und wenigstens die Zubereitung (A) oder die Zubereitung (B) einen Lebensmittelfarbstoff enthält, der beim Vermischen der Zubereitungen (A) und (B) eine Farbänderung verursacht.

Weitere Ausführungsformen der Erfindung betreffen das damit herstellte funktionelle Getränk sowie eine Getränkeverpackung, die mit den Zubereitungen (A) und (B) befüllt ist. Dabei ist die Getränkeverpackung mit der flüssigen Zubereitung (A) befüllt und umfasst einen Verschluss, der mit der festen oder flüssigen Zubereitung (B) befüllt ist und zur Abgabe der Zubereitung (B) in die flüssige Zubereitung (A) vorgesehen ist.

Bevorzugte Ausführungsformen der Erfindung sind in der nachfolgenden Beschreibung, den Beispielen, den Ansprüchen und Zeichnungen beschrieben.

Die Zeichnungen zeigen:
Figur 1 eine schematische Darstellung einer Getränkeverpackung in Form einer Getränkeflasche.
Figur 2 eine weitere schematische Darstellung einer Getränkeverpackung in Form einer Getränkeflasche
Figur 3a einen Getränkeverpackungsverschluss.
Figur 3b einen Getränkeverpackungsverschluss mit Tamper-Proof-Ring.
Figuren 4a, 4b und 4c einen Getränkeverpackungsverschluss mit Tamper-Proof-Ring in verschiedenen Stadien bei der Abgabe einer Zubereitung

Unter dem Begriff "funktionelles Getränk" (engl. *Functional Drink*) wird vorliegend ein für den menschlichen Genuss geeignetes Getränk verstanden, das insbesondere gesundheitsfördernd und anregend wirkt.

Gemäß der Erfindung wird das funktionelle Getränk vor dem Verzehr oder Genuss durch Vermischen von getrennten, mischfertigen, vordosierten Zubereitungen oder Bestandteilen hergestellt.

Das erfindungsgemäße System zur Herstellung oder Zubereitung des funktionellen Getränks umfasst wenigstens zwei getrennte Zubereitungen (A) und (B), insbesondere zwei getrennte Zubereitungen (A) und (B).

Die Zubereitung (A) ist flüssig und enthält wenigstens Wasser. Mit Wasser ist vorliegend entmineralisiertes Wasser gemeint und die Mengenangaben hierin sind auf entmineralisiertes Wasser bezogen. Soweit das verwendete Wasser Salze, Mineralien (z.B. Natriumsalz) oder andere hierin genannte Bestandteile enthält, ist dies entsprechend zu berücksichtigen. Wenigstens die Zubereitung (A) oder die Zubereitung (B), insbesondere die Zubereitung (A), enthält ein Salz. Vorzugsweise enthält die Zubereitung (A) wenigstens 50 Gew.-%, insbesondere wenigstens 70 Gew.-% oder wenigstens 80 Gew.-% Wasser, beispielsweise wenigstens 75 Gew.-%, wenigstens 85 Gew.-% oder wenigstens 90 Gew.-% Wasser. Die Menge an Wasser wird auch dadurch festgelegt, dass ein oder mehrere Salze sowie ggf. weitere vorhandene Stoffe in dem Wasser größtenteils, vorzugsweise vollständig, löslich sind. Bei der Zubereitung (A) handelt es sich um eine wässrige Präparation, die beispielsweise weniger als 5 Gew.-%, insbesondere weniger als 1 Gew.-%, an in dem Wasser unlöslichen Stoffen enthält. Am meisten bevorzugt liegt Zubereitung (A) als eine Lösung vor.

Die Mengenangaben in Gew.-% zur Zubereitung (A) beziehen sich im vorliegenden Text auf 100 Gew.-% der Zubereitung (A), soweit nichts anders angegeben ist. In gleicher Weise beziehen sich Mengenangaben in Gew.-% zur Zubereitung (B) im vorliegenden Text auf 100 Gew.-% der Zubereitung (B).

Bei dem Salz handelt es sich um Elektrolyte, Elektrolytsalze oder Salze von Mineralien, die vom menschlichen Körper benötigt werden. Insbesondere handelt es sich um Salze der Alkali- und Erdalkalielemente des Periodensystems, beispielhaft um ein Calcium-, Magnesium-, Kalium- und/oder Natriumsalz. Zum Beispiel kann wenigstens ein Calcium-, Magnesium- und/oder Kaliumsalz vorliegen, z. B. ein Calcium- und Magnesiumsalz. Bei dem Salz liegt insbesondere ein Citrat, Carbonat und/oder Lactat vor, wobei Citrat und/oder Carbonat am meisten bevorzugt sind. Die Menge an Salzen orientiert sich daran, was der menschliche Körper benötigt, und liegt im Bereich dessen, was der Fachmann üblicherweise einsetzt. Sie kann vom Fachmann leicht bestimmt werden. Eine geeignete Menge liegt beispielsweise im Bereich von 0,150 bis 0,250 g Salzgehalt/ 100 ml des fertigen Getränks aus den Zubereitungen (A) und (B), z.B. 0,170 g/100 ml, 0,180 g/100 ml, 0,185 g/100 ml oder 0,190 g/100 ml.

In bevorzugten Ausführungsformen enthält wenigstens Zubereitung (A) oder die Zubereitung (B), insbesondere die Zubereitung (A), weiterhin Cholin. Die Menge an Cholin orientiert sich daran, was der menschliche Körper benötigt, und kann vom Fachmann bestimmt werden. Eine geeignete Menge liegt beispielsweise im Bereich von 35 bis 45 mg Cholin/100 ml des fertigen Getränks aus den Zubereitungen (A) und (B), beispielsweise 40 mg oder 41 mg Cholin auf 100 ml des fertig hergestellten Getränks.

In anderen Ausführungsformen kann die Zubereitung (A) und/oder die Zubereitung (B) nach Bedarf einen oder mehrere Zusatzstoffe ausgewählt aus der Gruppe bestehend aus Ascorbinsäure (Vitamin C), Säuerungsmittel, Füllstoff, Aromastoff, Süßstoff, und Stabilisator enthalten. Diese Zusatzstoffe sind im Lebensmittelrecht zugelassen und dem Fachmann wohlbekannt. Beispielhafte Ausführungsformen für das Säuerungsmittel sind Citronensäure, für den Füllstoff Polydextrose, für den Aromastoff Minzearoma, für den Süßstoff Stevioside, Aspartam oder Saccharin, und für den Stabilisator Gummi arabicum und Glycerinester. Die Menge an diesen Zusatzstoffen liegt im Bereich dessen, was der Fachmann üblicherweise einsetzt, und kann vom Fachmann leicht bestimmt werden. Eine geeignete Menge für Vitamin C liegt beispielsweise im Bereich von 20 bis 30 mg Vitamin C/100 ml des fertigen Getränks aus den Zubereitungen (A) und (B), beispielsweise 24 mg Vitamin C/100 ml Fertiggetränk. In beispielhaften Ausführungsformen enthält die Zubereitung (A) einen oder mehrere Stoffe ausgewählt aus Säuerungsmittel, Füllstoff, Aromastoff, Süßstoff, und/oder Stabilisator. In anderen beispielhaften Ausführungsformen enthält die Zubereitung (B) einen oder mehrere Stoffe ausgewählt aus Vitamin C, Säuerungsmittel, Aromastoff, Süßstoff, und/oder Stabilisator.

Wenigstens die Zubereitung (A) oder die Zubereitung (B) enthält einen Lebensmittelfarbstoff, der beim Vermischen der Zubereitungen (A) und (B) eine Farbänderung verursacht. In einer Ausführungsform enthält die Zubereitung (A) einen Lebensmittelfarbstoff, in einer anderen Ausführungsform die Zubereitung (B). Bevorzugt ist ein Lebensmittelfarbstoff in Zubereitung (B) enthalten, ohne darauf beschränkt zu sein. Der Lebensmittelfarbstoff ist beispielsweise Chlorophyllin oder ein Kupferderivat davon, welcher auch als E 140 oder E 141 bekannt ist. Dieser Farbstoff bewirkt beim Zusammenmischen der Zubereitungen (A) und (B) einen Farbumschlag von farblos in grün. Andere, dem Fachmann bekannte Lebensmittelfarbstoffe können ebenfalls verwendet werden. Die Menge des Farbstoffs liegt im Bereich dessen, was der Fachmann üblicherweise einsetzt, um den gewünschten Farbumschlag zu erreichen, und kann vom Fachmann leicht bestimmt werden.

Die Zubereitung (B) kann wenigstens ein B-Vitamin enthalten. Insbesondere kann sie ein, zwei, drei, vier oder fünf B-Vitamine ausgewählt aus Thiamin (Vitamin B₁), Riboflavin (Vitamin B₂), Pantothensäure (Vitamin B₅), Vitamin B₆, Folsäure (Vitamin B₉) und Vitamin B₁₂ enthalten. In bevorzugten Ausführungsformen liegen alle diese sechs Vitamine vor. Die Menge an B-Vitaminen liegt, in Abhängigkeit davon welche und wie viele B-Vitamine eingesetzt werden, im Bereich dessen, was der Fachmann üblicherweise einsetzt, und kann vom Fachmann leicht bestimmt werden. Beispielhafte Mengen sind 0,90 mg Pantothensäure, 0,21 mg Vitamin B6, 0,21 mg Riboflavin, 0,17 mg Thiamin, 30,0 µg Folsäure und 0,38 µg Vitamin B12, jeweils bezogen auf 100 ml des fertigen Getränks aus den Zubereitungen (A) und (B).

In einer beispielhaften Ausführungsform enthält wenigstens die Zubereitung (A) oder die Zubereitung (B), insbesondere die Zubereitung (B), eine Kohlenhydratquelle, insbesondere ein Saccharid, bevorzugt Maltodextrin. Geeignete Mengen liegen im Bereich von 0,4 bis 0,8 g Kohlenhydrate/100 ml Fertiggetränk, beispielsweise 0,6 g Kohlenhydrate/100 ml Fertiggetränk.

Wenigstens die Zubereitung (A) oder die Zubereitung (B) enthält einen anregenden Stoff, insbesondere Coffein. In einer Ausführungsform enthält die Zubereitung (B) einen anregenden Stoff, insbesondere Coffein. In einer anderen Ausführungsform enthält die Zubereitung (A) einen anregenden Stoff, insbesondere Coffein. Beispielsweise kann als anregender Stoff ein Guaranaextrakt verwendet werden. Dessen Menge wird so gewählt, dass eine anregende Wirkung auftritt. Eine geeignete Menge liegt im Bereich von 20 bis 30 mg Coffein/100 ml des fertigen Getränks aus den Zubereitungen (A) und (B), beispielsweise 30 mg Coffein auf 100 ml des fertig hergestellten Getränks. Bevorzugt liegt Coffein in der Zubereitung B vor, ist jedoch nicht darauf beschränkt.

In einer weiteren Ausführungsform enthält wenigstens die Zubereitung (A) oder die Zubereitung (B), insbesondere die Zubereitung (B), Cystein oder/und ein Zinksalz, insbesondere Cystein und ein Zinksalz. Die Mengen an diesen Stoffen liegen im Bereich dessen, was der Fachmann üblicherweise einsetzt, und können vom Fachmann leicht bestimmt werden. Beispielsweise kann die Menge an Cystein 10 mg Cystein auf 100 ml des fertig hergestellten Getränks betragen. Die Menge an Zinksalz kann beispielsweise 0,8 mg Zink auf 100 ml des fertig hergestellten Getränks betragen. Bei Cystein handelt es sich vorliegend um die L-Form (L-Cystein).

In beispielhaften Ausführungsformen liegen die B-Vitamine, Folate, Cystein und Cholin in solchen Konzentrationen im fertig hergestellten Getränk vor, dass ein optimales Funktionieren des *"One Carbon Cycle"* ermöglicht wird. Dieser Zyklus stellt einen zentralen regenerativen Stoffwechselprozess im Körper dar, der sowohl die körperliche (z. B. Homocysteinabbau) als auch mentale Aktion und Regeneration steuern kann. Daneben wird ihm in der Epigenetik ein entscheidender Einfluss auf die "Methylierung der DNA" zugeschrieben, damit kurz- und langzeitige Stoffwechselprozesse im Körper korrekt reguliert werden können.

Die Mengen der jeweiligen Bestandteile in den Zubereitungen (A) und (B) werden vorzugsweise so gewählt, dass sie im fertig hergestellten Getränk den jeweiligen üblichen Tagesbedarf eines Erwachsenen nicht überschreiten. Das Verhältnis der Zubereitungen (A) und (B) zueinander ist beispielsweise derart, dass 5 bis 10 g Zubereitung (A), insbesondere 6 bis 8 g Zubereitung (A), und 990 bis 995 g Zubereitung (B), insbesondere 992 bis 994 g Zubereitung (B) zur Herstellung von 1 Liter fertigem Getränk verwendet werden. Es ist aber auch möglich, die Mengen an einem, mehreren oder allen der Bestandteile so zu wählen, dass sie 150% oder mehr des Tagesbedarfs eines Erwachsenen abdecken.

Neben den genannten Bestandteilen können in den Zubereitungen (A) und (B) nach Bedarf weitere Inhaltsstoffe enthalten sein.

Die Zubereitung (B) kann fest oder flüssig sein. Vorzugsweise ist sie fest, bevorzugt liegt ein Pulver vor. Zweckmäßigerweise wird ein geeignetes Pulver durch ein dem Fachmann bekanntes Agglomerationsverfahren hergestellt. Beispielsweise sieht ein solches Agglomerationsverfahren im Fließbettverfahren das Anfeuchten eines Feinpulvers mit Wasser und anschließendes Trocknen zur Teilchenvergrößerung (Agglomeration) vor.

In einer besonders bevorzugten Ausführungsform befinden sich die Zubereitungen (A) und (B) getrennt voneinander in einer Getränkeverpackung, insbesondere in einer Getränkeflasche, wobei jedoch andere Formen nicht ausgeschlossen sind.

Eine weitere Ausführungsform der Erfindung betrifft ein fertiges Getränk mit der gleichen Zusammensetzung wie es durch Vermischen der hierin beschriebenen Zubereitungen (A) und (B) erhalten wird, ohne auf die Art der Herstellung beschränkt zu sein. Beispielsweise kann das fertige Getränk durch Vermischen der Bestandteile hergestellt und luftdicht verschlossen werden, z.B. in einer Dose.

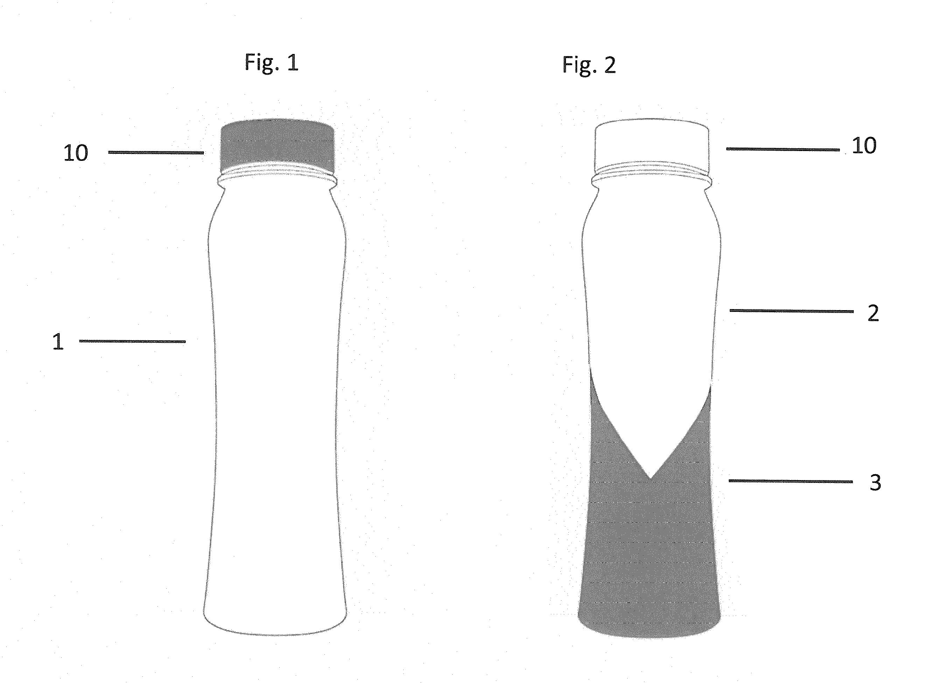

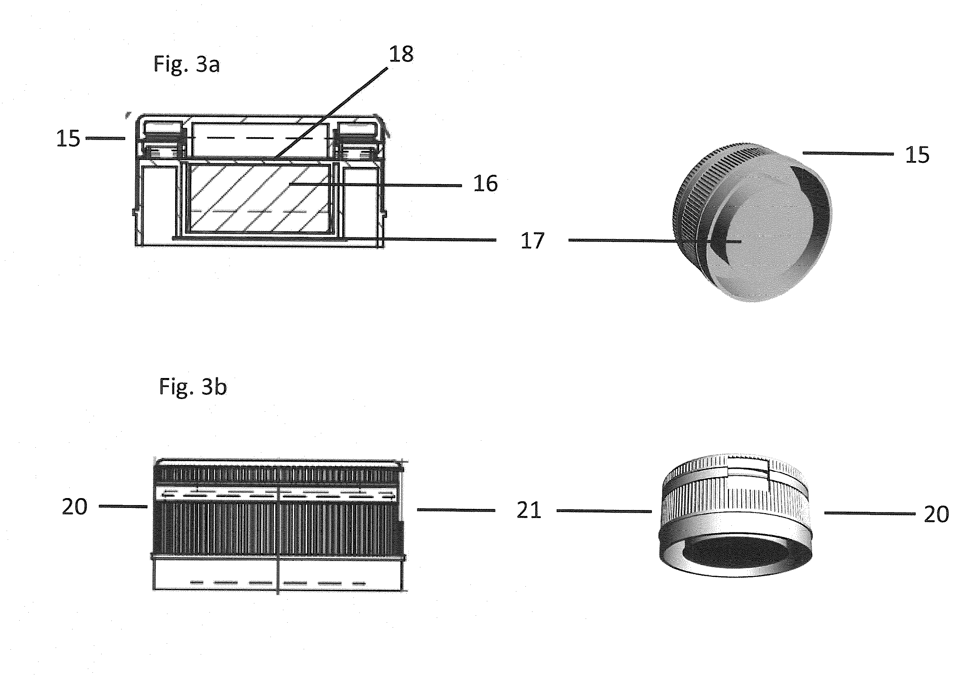

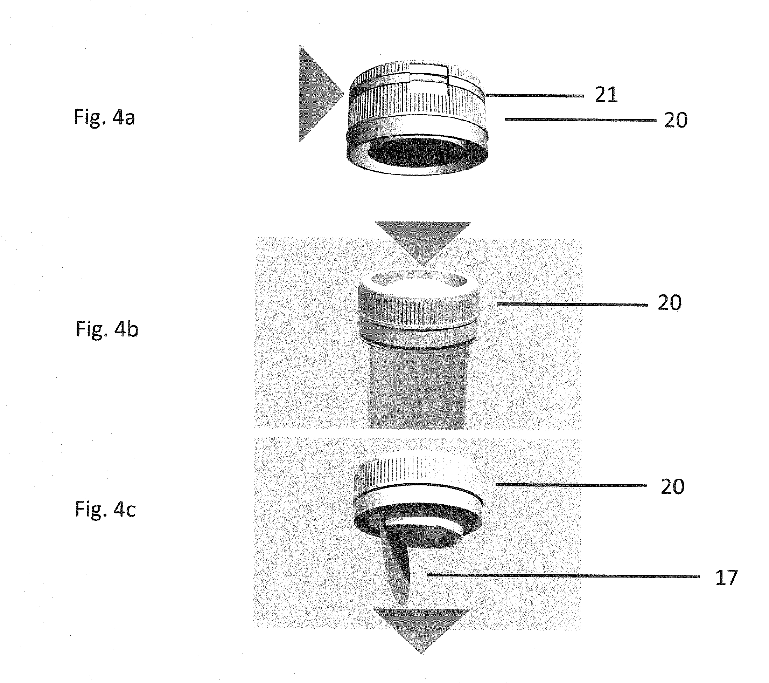

Eine Ausführungsform der Erfindung betrifft eine Getränkeverpackung, in der die beiden Zubereitungen aufbewahrt und vor dem Verzehr des Getränks miteinander vermischt werden, um das funktionelle Getränk herzustellen. Eine beispielhafte Getränkeverpackung ist schematisch in Figur 1 und Figur 2 mit Bezugsziffer 1 gezeigt. Vorliegend bezeichnen gleiche Bezugsziffern in allen Figuren das Gleiche. Figur 1 und Figur 2 zeigen eine Getränkeverpackung in Form einer Getränkeflasche, die vorzugsweise aus Kunststoff hergestellt ist, ohne jedoch darauf beschränkt zu sein. Die Getränkeverpackung oder Getränkeflasche kann farblich ansprechend gestaltet werden. Wie in Figur 2 gezeigt, kann die Getränkeverpackung beispielsweise zweifarbig gestaltet sein, wobei der Abschnitt mit Bezugsziffer 2 nicht transparent, z.B. weiß, ist, und der Abschnitt mit Bezugsziffer 3 wenigstens zum Teil oder ganz transparent, vorzugsweise ganz transparent, ist, wodurch darin der Farbumschlag beobachtet werden kann. In Figur 1 und Figur 2 ist weiterhin ein Verschluss der Getränkeverpackung mit Bezugsziffer 10 gezeigt, welcher in den Figuren 3 und 4 weiter beschrieben wird. Vorzugsweise handelt es sich bei dem Verschluss 10 um einen Schraubverschluss. In Verschluss 10 befindet sich die Zubereitung (B), während sich die Zubereitung (A) in der Getränkeverpackung oder Getränkeflasche befindet.

Figur 3a zeigt links als Konstruktionszeichnung einen Querschnitt durch einen Getränkeverpackungsverschluss 15, der eine Kammer 16 umfasst. Die Kammer 16 ist mit der Zubereitung (B) befüllt. Die Kammer 16 ist derart ausgebildet, dass sie seitlich von der Verschlusswand eingegrenzt wird. Von unten wird sie durch eine Abdichtungsfolie (*sealing membrane)* 17 abgeschlossen. Oben wird die Kammer 16 durch eine Folie oder Membran 18 abgeschlossen. Das Material für die Folien oder Membranen 17 und 18 kann gleich oder verschieden sein. Es wird so gewählt, dass die Folien manuell geöffnet werden können, beispielsweise durch Fingerdruck von oben. Zum Beispiel ist eine Alufolie oder Kunststofffolie geeignet. Figur 3a zeigt rechts eine weitere Darstellung des Verschlusses 15, wobei die Abdichtungsfolie 17 zu sehen ist.

Figur 3b zeigt links als Konstruktionszeichnung von außen einen Getränkeverpackungsverschluss 20 mit Tamper-Proof-Ring. Die gezeigten Rillen sind beispielhaft und nicht beschränkend. Im Verschluss 20 befindet sich ebenso wie im Verschluss 15 die Kammer 16 (hier nicht gezeigt), die mit der Zubereitung (B) befüllt ist. Der Verschluss 20 umfasst zusätzlich einen Tamper-Proof-Ring 21. Dabei handelt es sich um ein dünnes Bändchen, z.B. aus Kunststoff, das vor Gebrauch abgezogen wird. Figur 3b zeigt rechts eine weitere Darstellung des Verschlusses 20, wobei der Tamper-Proof-Ring 21 zu sehen ist.

Die Figuren 4a, 4b und 4c zeigen einen Getränkeverpackungsverschluss 20 mit Tamper-Proof-Ring 21 in verschiedenen Stadien bei der Abgabe einer Zubereitung. Figur 4a zeigt den Verschluss 20 mit Tamper-Proof-Ring 21, welcher entfernt wird (Pfeil). Figur 4b zeigt nach dem Abziehen des Tamper-Proof-Rings wie eine Kraft (Pfeil) auf den Verschluss 20 ausgeübt wird, beispielsweise durch Fingerdruck, um die Folien bzw. Membranen, die die mit der Zubereitung (B) befüllte Kammer oben und unten abschließen, wenigstens teilweise zu durchstoßen. Nach Durchstoßen der unteren Folie fällt die Zubereitung (B) in die Zubereitung (A) hinein und kann mit dieser vermischt werden. Figur 4c zeigt die untere durchstoßene Folie oder Membran. Wie gezeigt, kann vorgesehen sein, dass die Folie oder Membran zu einem Teil durchstoßen wird und der Rest der Folie am Verschluss hängen bleibt. Es ist auch möglich, dass die Folie oder Membran vollständig durchstoßen wird und damit in die Verpackung oder Flasche fällt (nicht gezeigt). Nachdem die Zubereitung (B) in die flüssige Zubereitung (A) abgegeben ist, wird sie mit dieser vermischt, z.B. durch Schütteln in der Hand.

Der Verschluss kann weiterhin ausgebildet sein wie beispielsweise in den Dokumenten CH 700 312 A2 oder EP 2 627 574 B1 beschrieben. Insbesondere kann er als Kapselverschluss oder Kunststoffverschluss ausgebildet sein.

Das erfindungsgemäß hergestellte funktionelle Getränk dient der Erhaltung von Wohlbefinden und Leistungsfähigkeit. Die akute Wirkung (Stabilisierung des Gefäß-/Kreislaufsystems) im Körper und Gehirn entsteht durch das Zusammenwirken einer Wasser-Elektrolytmischung zur Expansion des Extrazellulär-Raums und damit zur Stabilisierung des Wasser- und Elektrolythaushaltes. Das Koffein dient der Blutdruckstabilisierung und Unterstützung von Muskel- und Gehirnfunktionen. Das Cholin, das Cystein und die B-Vitamine dienen einem optimalen Funktionieren des Regenerationszyklus (*One-Carbon-Cycle*). Das Getränk, das den Körper und das Gehirn in bestimmten Situationen mit funktionellen Ingredienzien und ausgewählten Nährstoffen versorgt, eignet sich beispielsweise sehr gut bei Dehydrierung. Ursache für eine Dehydrierung kann eine Störung im Wasser- und Elektrolythaushalt und/oder eine Fehlregulation sein. Damit können Müdigkeit, Abgeschlagenheit und verminderte geistige und körperliche Leistungsbereitschaft und reduziertes Wohlbefinden einhergehen. Solche Zustände treten z.B. nach übermäßigem Konsum von Alkohol, beim Sport und bei nicht zeitgerechtem Essen und Trinken auf. Daneben kann eine Gefäßdysregulation (initialer Blutdruckabfall etc.) bei manchen Menschen zum Migräneanfall führen, der sich zu Beginn als Aura oder Flimmerskotom klinisch zeigen kann. Auch in solchen Fällen kann das funktionelle Getränk eingesetzt werden.

Das nachfolgende Beispiel beschreibt eine bevorzugte Ausführungsform, ohne die Erfindung zu beschränken.

Die Zubereitung (A) enthält: 85 Gew.-% Wasser; 4 Gew.-% Säuerungsmittel; der Rest sind Calciumlactat, Trikaliumcitrat, Magnesiumcarbonat, Natriumchlorid, Aroma, Cholin, Süßstoff, und Stabilisator.

Die Zubereitung (B) enthält: 48 Gew.-% Maltodextrin, 37 Gew.-% Guaranaextrakt (Coffein), 7,5 Gew.-% Natriumhydrogencarbonat, 3 Gew.-% Vitamin C, 1,3 Gew.-% Cystein; der Rest sind Zinkgluconat, Aroma, Farbstoff E141, Thiamin (Vitamin B₁), Riboflavin (Vitamin B₂), Pantothensäure (Vitamin B₅), Vitamin B₆, Folsäure (Vitamin B₉) und Vitamin B₁₂.

In eine Flasche mit Verschluss, wie in Fig. 1 oder Fig. 2 gezeigt, werden 250 ml der flüssigen Zubereitung (A) in den Boden der Flasche eingefüllt. 8 g der pulverförmigen Zubereitung (B) werden in den Verschluss der Flasche eingebracht, beispielsweise, wie in Fig. 3a gezeigt, in die Kammer 16. Durch Drücken auf den Verschluss, beispielsweise wie in Fig. 4b und 4c gezeigt, gegebenenfalls durch vorheriges Entfernen eines Tamper-Proof-Rings 21 gemäß Fig. 4a, wird die Zubereitung (B) in die Zubereitung (A) abgegeben und mit dieser vermischt, wobei der Farbumschlag auftritt. Das Getränk ist dann trinkfertig.

## Patentansprüche

1. System umfassend zwei getrennte Zubereitungen zur Herstellung eines funktionellen Getränks, umfassend eine flüssige Zubereitung (A) und eine feste oder flüssige Zubereitung (B), wobei
die Zubereitung (A) wenigstens Wasser enthält,
wenigstens die Zubereitung (A) oder die Zubereitung (B), insbesondere die Zubereitung (A), wenigstens ein Salz enthält,
die Zubereitung (B) wenigstens einen Stoff ausgewählt aus der Gruppe bestehend aus den Vitaminen der Gruppe B und Cystein enthält,
wenigstens die Zubereitung (A) oder die Zubereitung (B) einen anregenden Stoff, insbesondere Coffein, enthält, und
wenigstens die Zubereitung (A) oder die Zubereitung (B) einen Lebensmittelfarbstoff, der beim Vermischen der Zubereitungen (A) und (B) eine Farbänderung verursacht, enthält.

2. System nach Anspruch 1, wobei das Salz ein Calcium-, Magnesium-, Kalium- und/oder Natriumsalz umfasst, insbesondere wobei das Salz Citrat, Carbonat und/oder Lactat ist.

3. System nach Anspruch 1 oder 2, wobei wenigstens die Zubereitung (A) oder die Zubereitung (B), insbesondere die Zubereitung (A), Cholin enthält.

4. System nach einem der Ansprüche 1 bis 3, wobei die Zubereitung (A) weiterhin einen oder mehrere Stoffe ausgewählt aus Säuerungsmittel, Füllstoff, Aromastoff, Süßstoff, und Stabilisator enthält.

5. System nach einem der vorhergehenden Ansprüche, wobei die B-Vitamine Thiamin (Vitamin B₁), Riboflavin (Vitamin B₂), Pantothensäure (Vitamin B₅), Vitamin B₆, Folsäure (Vitamin B₉) und/oder Vitamin B₁₂, umfassen.

6. System nach einem der vorhergehenden Ansprüche, wobei wenigstens die Zubereitung (A) oder die Zubereitung (B), insbesondere die Zubereitung (B), weiterhin eine Kohlenhydratquelle, insbesondere ein Saccharid, bevorzugt Maltodextrin, enthält.

7. System nach einem der vorhergehenden Ansprüche, wobei die Zubereitung (B) Coffein enthält.

8. System nach einem der vorhergehenden Ansprüche, wobei die Zubereitung (B) den Lebensmittelfarbstoff, insbesondere Chlorophyllin oder einen Kupferkomplex davon, enthält.

9. System nach einem der vorhergehenden Ansprüche, wobei die Zubereitung (B) Cystein oder/und ein Zinksalz, insbesondere Cystein und ein Zinksalz enthält.

10. System nach einem der vorhergehenden Ansprüche, wobei die Zubereitung (B) fest, insbesondere ein Pulver, ist.

11. System nach einem der vorhergehenden Ansprüche, wobei die Zubereitung (B) weiterhin einen oder mehrere Stoffe ausgewählt aus Ascorbinsäure (Vitamin C), Säuerungsmittel, Aromastoff, Süßstoff, und Stabilisator enthält.

12. Funktionelles Getränk, erhältlich durch Vermischen der Zubereitungen (A) und (B) des Systems nach einem der Ansprüche 1 bis 11.

13. Getränkeverpackung zur Herstellung eines funktionellen Getränks gemäß Anspruch 12, wobei eine Getränkeverpackung (1) mit der flüssigen Zubereitung (A) befüllt ist und einen Verschluss (10) umfasst, der mit der festen oder flüssigen Zubereitung (B) befüllt ist und zur Abgabe der Zubereitung (B) in die flüssige Zubereitung (A) vorgesehen ist.

14. Getränkeverpackung nach Anspruch 13, ausgebildet als Getränkeflasche.

15. Getränkeverpackung nach Anspruch 13 oder 14, wobei die Getränkeverpackung (1) wenigstens zweifarbig ist, insbesondere wobei ein Teil (2) nicht transparent ist, und ein anderes Teil (3) transparent ist.
